# DEMANDE DE BREVET EUROPEEN

(11) **EP 0 952 035 A1**
(43) Date de publication de la demande: **27.10.1999**
(21) Numéro de dépôt: 99107836.1
(22) Date de dépôt: 20.04.1999
(51) Int. Cl.: B60Q 3/06

(54) **Dispositif d'alimentation temporisée pour l'éclairage d'un coffre de véhicule automobile**

(30) Priorité: 24.04.1998 FR 9805178
(71) Demandeur: SIEMENS AUTOMOTIVE S.A., 31036 Toulouse Cédex (FR)
(72) Inventeur: Brillon, Alain, 31270 Villeneuve Tolosane (FR)
(74) Mandataire: Epping, Wilhelm, Dr.-Ing.

(57) **Abrégé**

La présente invention concerne un dispositif d'alimentation temporisée (10) pour l'éclairage (14) d'un coffre de véhicule automobile. Cet éclairage fonctionne lors de l'ouverture du coffre par activation d'un contact de coffre (13). Le dispositif selon l'invention comporte un premier circuit (20) de détection de fermeture du contact de coffre en partie commun et électriquement isolé avec un second circuit (21) d'alimentation temporisée de l'éclairage de ce coffre. Une unité centrale de calcul (11) est adaptée lorsqu'elle reçoit un signal en provenance du contact de coffre (13) lui indiquant que le coffre est ouvert pour délivrer un signal de commande (19) d'une alimentation temporisée de l'éclairage du coffre.

## Description

La présente invention est relative à un dispositif d'alimentation temporisée pour l'éclairage d'un coffre de véhicule automobile.

Les véhicules automobiles sont communément munis de dispositifs permettant d'éclairer le coffre lorsque celui-ci est ouvert. A cet effet, un interrupteur à contact est actionné lorsque le coffre est ouvert. Ainsi de manière classique, l'ouverture du coffre du véhicule provoque l'alimentation de la lampe d'éclairage du coffre par la batterie du véhicule.

Cependant, ce type de dispositif présente quelques inconvénients. Ainsi, lorsque le contact d'ouverture coffre fonctionne mal, la batterie peut alimenter en continu la lampe d'éclairage du coffre. Dans ce cas, la batterie se trouve rapidement déchargée à l'insu du conducteur. En effet, celui ci ne peut pas vérifier si la lampe d'éclairage du coffre de son véhicule s'éteint lorsque le coffre est fermé.

De même, si le coffre du véhicule est mal refermé, ou laissé ouvert par inadvertance, l'éclairage du coffre est alors en fonctionnement continu ce qui provoque une décharge rapide de la batterie du véhicule.

L'objet de la présente invention est d'éviter l'apparition de telles pannes sournoises de la batterie du véhicule et de parer tout mauvais fonctionnement du contact de coffre ou toute ouverture 〈〈 abusive 〉〉 du coffre du véhicule.

A cet effet, la présente invention concerne un dispositif d'alimentation temporisée pour l'éclairage d'un coffre de véhicule automobile, le dit éclairage étant adapté pour fonctionner lors de l'ouverture du coffre par activation d'un contact de coffre, le dit dispositif étant caractérisé en ce qu'il comporte un premier circuit de détection de fermeture du contact de coffre en partie commun et électriquement isolé avec un second circuit d'alimentation temporisée de l'éclairage de ce coffre, une unité centrale de calcul étant adaptée pour recevoir un signal en provenance du contact de coffre lui indiquant une ouverture du coffre pour délivrer un signal de commande d'une alimentation temporisée de l'éclairage du coffre.

Ainsi, l'invention permet de réaliser un circuit de détection et de surveillance de la fermeture du coffre et un circuit d'alimentation temporisée de ce coffre, partiellement commun. L'unité centrale de calcul permet d'alimenter la lampe d'éclairage du coffre uniquement si le contact coffre est fermé et s'il fonctionne correctement. Ceci permet de minimiser les coûts de réalisation de ces deux circuits et élimine certaines causes de pannes intempestives de batterie. En outre, il n'est pas nécessaire de prévoir des câbles électriques supplémentaires alimentant la lampe du coffre pour réaliser cette alimentation temporisée.

Avantageusement, l'alimentation de la lampe de coffre est autorisée pendant un temps donné, au-delà de ce temps l'unité de calcul provoque la coupure de l'alimentation.

Avantageusement, dès que le véhicule est verrouillé, l'alimentation de la lampe d'éclairage du coffre est coupée.

Si le véhicule est laissé verrouillé ou non verrouillé, toute ouverture du coffre provoque l'alimentation temporisée de la lampe d'éclairage coffre.

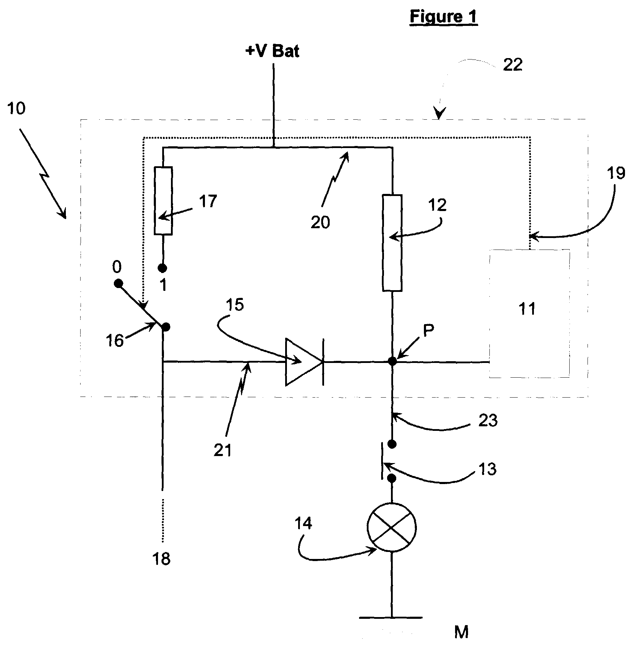

D'autres objets, caractéristiques et avantages de la présente invention ressortiront d'ailleurs de la description qui suit, à titre d'exemple non limitatif, et en référence à la figure 1 annexée représentant, de manière schématique, le dispositif selon la présente invention.

Selon le mode de réalisation représenté à la figure 1, le dispositif selon l'invention comporte :
- un premier circuit de détection 20 de l'ouverture 13 du coffre d'un véhicule et,
- un second circuit 21 d'alimentation d'une lampe 14 d'éclairage de ce coffre.

Le circuit de détection 20 comporte une alimentation permanente + V _{Bat} (batterie du véhicule), une résistance à excursion haute (résistance dite de "pull up") 12 de forte valeur, le contact 13 d'ouverture du coffre, et la lampe d'éclairage 14.

Le circuit d'alimentation 21 comporte l'alimentation permanente + V _{Bat} du véhicule, un interrupteur 16 recevant une commande 19 de fermeture temporaire en provenance d'une unité centrale de calcul 11, une diode 15, le contact de coffre 13 et la lampe d'éclairage 14. Cette lampe est reliée par ailleurs à la masse M du circuit.

Le fonctionnement du dispositif selon la présente invention est expliqué ci-après.

La batterie +V _{Bat} du véhicule alimente le premier circuit de détection 20. La résistance 12 est une résistance à excursion haute (résistance dite de "pull up") de très forte valeur (au moins 1 KΩ voire 10 KΩ). De ce fait, l'intensité du courant traversant le circuit de détection en aval de cette résistance est extrêmement faible, trop faible pour provoquer l'éclairage de la lampe 14 lorsque le contact 13 est fermé. La tension +v au point P est proche de V_{Bat} lorsque le contact 13 est ouvert. Lorsque ce contact 13 est fermé, cette tension est quasi nulle. De ce fait, la valeur de la différence de potentielle lue par l'unité de calcul 11 au point P détermine si le contact 13 est ouvert ou fermé. Lorsque cette différence de potentielle est de +v, le contact est ouvert (le coffre est fermé) et lorsque cette différence de potentielle est égale à la masse M (quasi nulle), le contact 13 est fermé (le coffre est ouvert).

Dès que l'unité de calcul 11 détecte que le contact de coffre est fermé (coffre ouvert), elle envoie un signal de commande 19 à l'interrupteur 16 du circuit d'alimentation pour qu'il passe du point 0 au point 1.

De ce fait, la batterie alimente via un fusible approprié 17 et la diode 15 la lampe d'éclairage du coffre 14. Cette lampe s'allume donc pendant tout le temps où l'interrupteur 16 est dans la position 1. La durée de l'alimentation de la lampe de coffre est prédéterminée (par exemple 5 mn).

Si, pendant ces cinq minutes, le coffre est refermé, le contact 13 s'ouvre et l'alimentation de la lampe 14 de coffre est interrompue.

A la fin des cinq minutes, l'alimentation de la lampe de coffre est interrompue. Une simple manoeuvre du coffre permet de la remettre en fonctionnement. Cette manoeuvre du coffre provoque en effet un changement d'état (fermé / ouvert) qui active de nouveau l'alimentation.

La temporisation de l'alimentation de la lampe d'éclairage du coffre évite que la batterie se décharge inutilement suite à un oubli de fermeture de la porte.

On notera que d'autres dispositifs alimentés temporairement 18 peuvent être alimentés sur commande de l'unité de calcul 11. Ces dispositifs peuvent, par exemple, être un plafonnier, une veilleuse de boîte à gants etc.

Pour éviter une remontée de masse M fortuite vers le point P lors du passage à la masse de l'un quelconque des ces autres dispositifs, une diode 15 est placée en amont du point P et en aval de l'interrupteur 16.

Le point P commun aux deux circuits permet d'une part à l'unité centrale de calcul 11 de déterminer si le contact d'ouverture 13 est actionné ou pas, et d'autre part permet l'alimentation de la lampe d'éclairage par le circuit d'alimentation.

L'ensemble des premier et second circuits, ainsi que l'unité centrale de calcul 11, peut constituer un même module électronique 22 disposé par exemple au niveau de la planche de bord du véhicule.

Il est à noter qu'il ne part de ce module 22 qu'une seule connexion vers la lampe d'éclairage du coffre. Ainsi, la détection de l'ouverture du coffre et l'alimentation de la lampe d'éclairage de coffre se fait par un seul et même câble électrique 23. De ce fait, on diminue le coût d'un tel dispositif par rapport à un dispositif classique nécessitant d'une part l'alimentation de la lampe de coffre et d'autre part la détection de l'ouverture de ce coffre par deux circuits séparés.

Un des avantages de la présente invention est de réaliser ces deux fonctions en utilisant des circuits communs, électriquement isolés entre eux.

On notera que, selon l'invention, un actionnement du coffre dès que le véhicule est déverrouillé entraîne un éclairement de la lampe de coffre.

La présente invention n'est pas limitée au mode de réalisation décrit et peut par exemple être utilisée pour la commande temporisée des plafonniers d'un véhicule automobile. Avantageusement, un plafonnier alimenté temporairement avec un dispositif du type de celui décrit précédemment présenterait en outre l'avantage de pouvoir être rallumé après la période de temporisation sans avoir à ouvrir une portière. Il suffirait alors d'actionner manuellement l'interrupteur d'éclairement de ce plafonnier (ce qui n'est pas possible à l'heure actuelle).

## Revendications

1. Dispositif d'alimentation temporisée (10) pour l'éclairage (14) d'un coffre de véhicule automobile, le dit éclairage étant adapté pour fonctionner lors de l'ouverture du coffre par activation d'un contact de coffre (13), le dit dispositif étant caractérisé en ce qu'il comporte un premier circuit (20) de détection de fermeture du contact de coffre en partie commun et électriquement isolé avec un second circuit (21) d'alimentation temporisée de l'éclairage de ce coffre, une unité centrale de calcul (11) étant adaptée pour recevoir un signal en provenance du contact de coffre (13) lui indiquant une ouverture du coffre pour délivrer un signal de commande (19) d'une alimentation temporisée de l'éclairage du coffre.

2. Dispositif selon la revendication 1, caractérisé en ce que le signal de détection d'ouverture du coffre est lu par l'unité centrale de calcul (11) en un point (P) commun aux deux circuits (20, 21).

3. Dispositif d'alimentation selon la revendication 1 ou 2, caractérisé en ce que l'isolation électrique du circuit de temporisation (21) est réalisée par une diode (15) placée en amont du point commun (P) dans le circuit d'alimentation temporisée (21).
